# EUROPÄISCHE PATENTANMELDUNG

(11) **EP 4 296 041 A2**
(43) Veröffentlichungstag der Anmeldung: **27.12.2023**
(21) Anmeldenummer: 23165054.0
(22) Anmeldetag: 29.03.2023
(51) Int. Cl.: B29C 49/48, B29C 49/46, B29C 49/36

(54) **VORRICHTUNG UND VERFAHREN ZUM UMFORMEN VON KUNSTSTOFFVORFORMLINGEN ZU KUNSTSTOFFBEHÄLTNISSEN MIT WECHSELROBOTER**

(30) Priorität: 15.07.2022 DE 102022117742
(71) Anmelder: Krones AG, 93073 Neutraubling (DE)
(72) Erfinder: Schlagenhaufer, Martin, 93073 Neutraubling (DE); Geltinger, Florian, 93073 Neutraubling (DE)
(74) Vertreter: Hannke Bittner & Partner mbB Regensburg

(57) **Zusammenfassung**

Vorrichtung zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen jeweils Blasformeinrichtungen (24) aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen, wobei die Vorrichtung (1) einen Reinraum (8) aufweist, innerhalb dessen die Kunststoffvorformlinge (10) zu den Kunststoffbehältnissen (15) expandiert werden und dieser Reinraum (8) mittels wenigstens einer Wandung gegenüber einer unsterilen Umgebung abgegrenzt ist, dadurch gekennzeichnet, dass die Vorrichtung (1) eine Wechseleinrichtung (12) zum Wechseln von Blasformeinrichtungen aufweist.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Üblicherweise werden dabei erwärmte Kunststoffvorformlinge durch Beaufschlagung mit einem fließfähigen Medium, insbesondere Druckluft, zu Kunststoffbehältnissen umgeformt. In jüngerer Zeit ist es jedoch auch bekannt, zum Expandieren der Kunststoffvorformlinge eine Flüssigkeit, wie insbesondere aber nicht ausschließlich das abzufüllende Getränk einzusetzen.

In jüngerer Zeit sind teilweise auch sterile Vorrichtungen dieser Art bekannt geworden. Diesen weisen den Vorteil auf, dass Kunststoffvorformlinge entweder bereits unmittelbar aus einem Ofen kommen können und daher steril sind oder aber durch eine Sterilisationseinrichtung sterilisiert wurden. Im Anschluss daran können diese ebenso steril zu den Kunststoffbehältnissen umgeformt werden. Dabei weisen derartige Vorrichten üblicherweise Reinräume auf, innerhalb derer der Expansionsvorgang erfolgt.

Im Stand der Technik hat sich gezeigt, dass gerade die Sterilhaltung des Reinraums, bzw. dessen Sterilisierung relativ aufwendig sind. Dies ergibt sich teilweise als Folge einer umfangreichen Interaktion zwischen dem Benutzer und der Anlage. Zeitweise müssen bei derartigen Vorrichtungen Blasformeinrichtungen ausgewechselt werden, beispielsweise, um auf unterschiedliche Flaschen umstellen zu können. Dies erfordert üblicherweise im Stand der Technik umfangreiche Eingriffe durch den Benutzer.

Der vorliegenden Erfindung liegt daher die Aufgabe zugrunde, derartige Blasformmaschinen betriebssicherer zu gestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die umzuformenden Kunststoffvorformlinge entlang eines vorgegebenen Transportpfads transportiert. Dabei weist die Transporteinrichtung einen drehbaren Transportträger auf, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen und insbesondere gasförmigen Medium zu den Kunststoffbehältnissen umformbar und insbesondere expandierbar sind.

Weiterhin weisen die Umformungsstationen jeweils Beaufschlagungseinrichtungen auf, um die Kunststoffvorformlinge mit dem fließfähigen Medium zu beaufschlagen, wobei die Vorrichtung weiterhin einen Reinraum aufweist, innerhalb dessen die Kunststoffvorformlinge zu den Kunststoffbehältnissen expandiert werden oder expandierbar sind. Weiterhin ist dieser Reinraum mittels wenigstens einer Wandung gegenüber einer unsterilen Umgebung abgegrenzt.

Erfindungsgemäß weist die Vorrichtung eine Wechseleinrichtung zum Wechseln von Blasformeinrichtungen auf. Bevorzugt erlaubt diese Wechseleinrichtung einen automatischen oder automatisierten Wechsel der Blasformen. Bevorzugt ist die Wechseleinrichtung außerhalb des Reinraums angeordnet.

Es wird daher im Rahmen der Erfindung vorgeschlagen, eine derartige (sterile) Blasformmaschine mit einer Wechseleinrichtung und insbesondere einem Wechselroboter auszustatten. Auf diese Weise können genauer definierte Wechselvorgänge vorgenommen werden und es kommt zu genau definierten Interaktionen zwischen der Wechseleinrichtung und der eigentlichen Blasformmaschine. Auf diese Weise kann der Grad an Verschmutzungen beim Wechselvorgang erheblich reduziert werden.

Bevorzugt handelt es sich bei der Wechseleinrichtung um einen Wechselroboter. Besonders bevorzugt weist die Wechseleinrichtung wenigstens ein Greifelement zum Greifen der Blasformen oder von Blasformteilen auf. Bevorzugt ist das Greifelement bezüglich wenigstens drei, bevorzugt bezüglich wenigstens vier und besonders bevorzugt bezüglich wenigstens fünf und besonders bevorzugt bezüglich wenigstens 6 Achsen beweglich.

Bei einer bevorzugten Ausführungsform weist die Wechseleinrichtung mehrere, insbesondere wechselbare, Greifelemente zum Greifen von anderen Elementen der Blasformmaschine auf, beispielsweise zum Greifen von Blasdüsen oder Reckstangen.

Bevorzugt dient die Wechseleinrichtung dazu, die Blasformen lediglich als Ganzes von der Station zu entnehmen und diese bevorzugt in einer Magazineinrichtung abzulegen. Danach setzt die Wechseleinrichtung bevorzugt einen neuen Blasformensatz ein.

Besonders bevorzugt ist die Greifeinrichtung zum Greifen der Blasform in ihrer Gesamtheit geeignet und bestimmt. Auch auf diese Weise kann der eigentliche Wechselvorgang vereinfacht werden. Bevorzugt weisen die Blasformen wenigstens zwei und bevorzugt wenigstens drei Teile auf. Hierbei kann es sich beispielsweise um zwei Seitenteile der Blasform sowie ein Bodenteil handeln. Besonders bevorzugt sind Sicherungsmittel vorgesehen, welche die Entnahme einer vollständigen Blasform ermöglichen und/oder welche während der Entnahme die Einzelteile der Blasformeinrichtung aneinanderhalten.

Besonders bevorzugt sind die Blasformteile an Blasformträgern angeordnet. Diese Blasformträger können bevorzugt bezüglich einander um eine Welle geschwenkt werden, um die Blasform in einem Arbeitsbetrieb sowie in einem Wechselbetrieb zu öffnen und zu schließen.

Besonders bevorzugt ist die Wechseleinrichtung dazu geeignet und bestimmt, einen Verriegelungsmechanismus, der die Blasformteile oder die Blasformträger aneinander hält zu öffnen und/oder zu schließen.

Bei einer bevorzugten Ausführungsform weist der Reinraum eine ringförmige und insbesondere torusförmige Gestalt auf. Bevorzugt ergibt sich die geometrische Gestalt des Reinraums durch eine Drehung eines Quadrats oder Polygons um eine Drehachse und insbesondere diejenige Drehachse, bezüglich derer der Transportträger drehbar ist.

Besonders bevorzugt weist die Vorrichtung wenigstens eine Wandung auf, die den Reinraum gegenüber einer unsterilen Umgebung begrenzt. Besonders bevorzugt weist die Vorrichtung wenigstens zwei Wandungen auf, wobei eine Wandung gegenüber der anderen Wandung beweglich und insbesondere drehbeweglich ist.

Bei einer weiteren vorteilhaften Ausführungsform weist die Vorrichtung eine umlaufende Dichtung auf. Diese Dichtung ist bevorzugt eine hydraulische Dichtung. Besonders bevorzugt weist die Dichtungseinrichtung einen mit Flüssigkeit und insbesondere Wasser befüllbaren oder befüllten Kanal auf. Besonders bevorzugt weist die Dichtungseinrichtung eine umlaufende Wandung und insbesondere ein umlaufendes Schwert auf, welches in den besagten Kanal eintaucht. Die Drehbewegung dieser umlaufenden Wandung ist dabei insbesondere an die Drehbewegung des drehbaren Trägers gekoppelt. Besonders bevorzugt ist die drehbare Wandung an dem oben beschriebenen Transportträger angeordnet.

Besonders ist der mit der Flüssigkeit befüllbare Kanal stationär angeordnet.

Besonders bevorzugt weisen die Umformungsstationen jeweils Reckeinheiten auf, welche dazu geeignet und bestimmt sind, die Kunststoffvorformlinge während ihrer Expansion in ihrer Längsrichtung zu dehnen. Diese Reckeinheiten weisen bevorzugt Reckstangen auf, welche in das Innere der Kunststoffvorformlinge einführbar sind.

Bei einer bevorzugten Ausführungsform weist die Beaufschlagungseinrichtung eine Blasdüse auf, welche an eine Mündung der Kunststoffvorformlinge ansetzbar ist, um diese zu expandieren. Daneben wäre auch eine Abdichtung gegenüber einem Tragring des Kunststoffvorformlings und/oder gegenüber einer Blasform denkbar.

Besonders bevorzugt ist die Wechseleinrichtung auch dazu geeignet und bestimmt, diese Blasdüse auszuwechseln. Besonders bevorzugt ist die Wechseleinrichtung auch dazu geeignet und bestimmt, eine Reckstange auszuwechseln.

Bevorzugt weist jede Umformungsstation eine Ventilanordnung auf, um die Kunststoffvorformlinge mit unterschiedlichen Druckniveaus zu beaufschlagen.

Bei einer bevorzugten Ausführungsform weist die Vorrichtung eine Antriebseinrichtung auf, um die Blasdüse in der Längsrichtung der Behältnisse zu bewegen und insbesondere auf die Kunststoffvorformlinge zuzustellen. Bei dieser Antriebseinrichtung kann es sich beispielsweise um eine pneumatische, eine hydraulische oder eine elektrische Antriebseinrichtung handeln.

Bei einer bevorzugten Ausführungsform ist die Wechseleinrichtung wenigstens teilweise und bevorzugt vollständig außerhalb des Reinraums angeordnet. Auf diese Weise kann die Vorrichtung in ihrer Gesamtheit kleiner gestaltet werden und es befinden sich nicht allzu viele komplizierte Bauteile im Inneren des Reinraums. Bevorzugt ist die Wechseleinrichtung während eines Arbeitsbetriebs der Vorrichtung vollständig außerhalb des Reinraums angeordnet. Bevorzugt sind wenigstens Bestandteile der Wechseleinrichtung während eines Wechselbetriebs durch im Arbeitsbetrieb bestehende Grenzen des Reinraums hindurch bewegbar.

Im Stand der Technik ist teilweise vorgesehen, dass sich ein Maschinenschutz durch ein Maschinenschutzrollo automatisiert öffnet. In diesem Falle erfolgt kein Eingriff in eine aseptische Umgebung. Allerdings ist auf diese Weise eine vollständige Abdichtung eines Reinraums bzw. eines Isolatorinnenraums nicht möglich.

Bei einer weiteren vorteilhaften Ausführungsform ist die Wechseleinrichtung dazu geeignet und bestimmt, den Reinraum bzw. dessen Gehäuse bzw. eine Wandung, welche den Reinraum begrenzt zu öffnen.

Bei einer bevorzugten Ausführungsform weist die Vorrichtung eine Betätigungseinrichtung zum Durchführen eines Wechselvorgangs von Blasformeinrichtungen der Umformungsstation auf, wobei bevorzugt diese Betätigungseinrichtung aus einer Gruppe von Betätigungseinrichtungen ausgewählt ist, welche Betätigungseinrichtungen zum Öffnen und Schließen von Blasformträgern, Betätigungseinrichtungen zum Lösen und/oder Aktivieren einer Befestigungseinrichtung zum Lösen und/oder zum Befestigen von Blasformteilen an Blasformträgerteilen, Betätigungseinrichtungen zum Zentrieren des drehbaren Transportträgers, Betätigungseinrichtungen zum Entriegeln und/oder Verriegeln von Blasformträgern, Betätigungseinrichtungen zum Spannen und/oder Entspannen von Beaufschlagungseinrichtungen, Betätigungseinrichtungen zum Öffnen und/oder Schließen des Reinraums und dergleichen enthält.

Besonders bevorzugt ist dabei wenigstens eine dieser Betätigungseinheiten bzw. Betätigungseinrichtungen und insbesondere die Betätigungseinrichtung für die Formträger, für eine Blasradzentrierung oder für die Beaufschlagungseinrichtung und insbesondere für die Blasdüse (insbesondere in einem Arbeitsbetrieb der Vorrichtung) nicht im aseptischen Bereich und/oder dem Reinraum angeordnet.

Besonders bevorzugt ist eine Betätigungseinrichtung zum Öffnen einer Verriegelung des Reinraums oder eines Öffnungsmechanismus im aseptischen Bereich bzw. innerhalb des Reinraums. Besonders bevorzugt ist jedoch eine Ansteuerung für diese Betätigungseinrichtung nicht im aseptischen Bereich und/oder innerhalb des Reinraums angeordnet.

Bevorzugt ist daher wenigstens eine der oben genannten Betätigungseinrichtungen und bevorzugt sind mehrere der Betätigungseinrichtungen außerhalb des Reinraums angeordnet. Insbesondere gehören diese Betätigungseinrichtungen zu der Wechseleinrichtung. So ist des möglich, dass die Wechseleinrichtung unterschiedliche Betätigungseinrichtungen aufnehmen kann. Besonders bevorzugt ist wenigstens eine der Betätigungseinrichtungen und bevorzugt mehrere der Betätigungseinrichtungen während eines Arbeitsbetriebs der Vorrichtung außerhalb des Reinraums angeordnet.

Bei einer weiteren vorteilhaften Ausführungsform weist die Vorrichtung eine Sterilisationseinrichtung zur Sterilisierung des Reinraums auf. Diese kann dabei insbesondere Wandungen des Reinraums bzw. den Innenraum des Reinraums mit einem Sterilisationsmedium beaufschlagen, insbesondere mit einem fließfähigen Sterilisationsmedium wie beispielsweise Peressigsäure oder Wasserstoffperoxid.

Bei einer bevorzugten Ausführungsform ist eine Sterilisationseinrichtung auch zum Sterilisieren einer oder mehrerer Betätigungseinrichtungen geeignet und bestimmt.

Besonders bevorzugt ermöglicht die Sterilisationseinrichtung eine CIP-Reinigung der Vorrichtung (Cleaning In Place) bzw. eine SIP-Sterilisation (Sterilisation In Place). Zu diesem Zweck ist es möglich, dass im Inneren des Raums eine Vielzahl von Beaufschlagungseinrichtungen wie etwa Spraydüsen oder Sprayköpfe angeordnet ist, die zum Sterilisieren des Reinraums mit einem Sterilisationsmedium dienen.

Bei einer weiteren bevorzugten Ausführungsform ist die Sterilisationseinrichtung dazu geeignet, Blasformeinrichtungen zu sterilisieren.

Bei einer weiteren bevorzugten Ausführungsform weist die Vorrichtung wenigstens eine Magazineinrichtung zum Aufbewahren von Wechselteilen der Vorrichtung und insbesondere zum Aufbewahren von Blasformeinrichtungen und/oder Blasformteilen auf. Weiterhin wäre es möglich, dass mehrere Magazineinrichtungen vorgesehen sind, beispielsweise zum Aufbewahren von Blasdüsen, von Reckstangen oder von anderen Komponenten.

Bei einer weiteren vorteilhaften Ausführungsform weist die Vorrichtung ein Gehäuse und/oder eine Einhausungseinrichtung zum Einhausen der Wechseleinrichtung auf. Auf diese Weise kann auch ein Schutzbereich geschaffen werden, der Verletzungen von Benutzern aber auch Beschädigungen von weiteren Maschinenteilen verhindert. Bei einer weiteren vorteilhaften Ausführungsform weist die Vorrichtung eine Erfassungseinrichtung auf, welche ein Öffnen der Einhausung erfasst.

Besonders bevorzugt ist diese Einhausung in wenigstens zwei Bereichen und bevorzugt in genau zwei Bereiche unterteilt. Diese Bereiche können dabei beispielsweise nebeneinander angeordnet sein.

Besonders bevorzugt ist in einem der beiden Bereiche die Wechseleinrichtung angeordnet und in dem anderen Bereich ist die oben erwähnte Magazineinrichtung angeordnet.

Bevorzugt sind diese beiden Bereiche durch eine Sicherungseinrichtung voneinander abgegrenzt und insbesondere eine Sicherungseinrichtung, welche dazu geeignet und bestimmt ist, zu erfassen, ob ein Benutzer von dem ersten Bereich in den zweiten Bereich gelangt. Bevorzugt ist jedoch diese Sicherungseinrichtung ohne eine mechanische Barriere ausgebildet, etwa in Form eines Lichtschrankenvorhangs.

Besonders bevorzugt ist die oben erwähnte Magazineinrichtung oder sind mehrere Magazineinrichtungen ebenfalls innerhalb dieser Einhausungseinrichtung angeordnet. Besonders bevorzugt sind die Magazineinrichtungen derart angeordnet, dass sie auch von der Wechseleinrichtung erreichbar sind. Bei einer bevorzugten Ausführungsform ist die Einhausung als Käfig ausgebildet und erlaubt damit eine Beobachtung der innerhalb der Einhausung ablaufenden Vorgänge.

Bei einer weiteren vorteilhaften Ausführungsform weist die Vorrichtung eine öffenbare Schnittstelle auf, über welche die Wechseleinrichtung Wechselvorgänge durchführen kann. Durch das Vorsehen dieser Schnittstelle können sehr definierte Wechselvorgänge durchgeführt werden.

Besonders bevorzugt können die Wechselvorgänge durch diese Schnittstelle hindurch ausgeführt werden. So kann beispielsweise der Reinraum durch ein Gehäuse mit einer Schiebetür abgeschlossen sein und diese Schiebetür kann, insbesondere durch die Wechseleinrichtung, geöffnet und/oder geschlossen werden. Daneben kann die Schnittstelle eine Verriegelungsklappe oder dergleichen aufweisen, welche besonders bevorzugt von der Wechseleinrichtung geöffnet und/oder geschlossen werden kann. Auch auf diese Weise kann eine weitere Interaktion des Benutzers mit dem Reinraum vermieden werden.

Bei einer weiteren vorteilhaften Ausführungsform weist die Vorrichtung eine Betätigungseinrichtung zum Öffnen dieser Schnittstelle auf. Bevorzugt ist diese Betätigungseinrichtung wenigstens teilweise und bevorzugt vollständig im Inneren des Reinraums angeordnet.

Hierbei kann es sich beispielsweise um einen pneumatischen, elektrischen oder einen anderen Aktivator handeln. Dieser kann beispielsweise an einer Grundplatte des Isolators angeordnet sein. Bei einer bevorzugten Ausführungsform weist diese Betätigungseinrichtung zum Öffnen der Schnittstelle eine Zylindereinrichtung und insbesondere einen Doppelzylinder auf. Besonders bevorzugt ist eine Ansteuerungseinrichtung für diese Betätigungseinrichtung außerhalb des Reinraums angeordnet.

Bei einer bevorzugten Ausführungsform weist die Schnittstelle ein Trennelement auf, welches den Reinraum gegenüber der Umgebung abtrennt, wobei dieses Trennelement bevorzugt in einer Ebene verläuft, welche schräg gegenüber einer vertikalen Richtung verläuft. Durch diese Ausgestaltung kann durch die Wechseleinrichtung beispielsweise ein Roboter näher an die Blasformeinrichtung herangeführt werden.

Bei diesem Trennelement kann es sich beispielsweise um eine (bewegliche) Wandung oder um eine (bewegliche) Scheibe oder dergleichen handeln. Bevorzugt ist also die Schnittstelle oder ein etwaiges Fenster zu dem Isolatorbereich schräg angeordnet, um die Wechseleinrichtung bzw. den Roboter möglichst nah an der Blaseinrichtung und/oder den einzelnen Umformungseinrichtungen platzieren zu können und um bevorzugt auch die Zugänglichkeit für den Bediener zu verbessern.

Besonders bevorzugt ist dieses Trennelement um mehr als 1°, bevorzugt um mehr als 2°, bevorzugt um mehr als 3° bezüglich einer vertikalen Ebene geneigt. Bevorzugt ist das Trennelement um weniger als 20°, bevorzugt um weniger als 15°, bevorzugt um weniger als 10° bezüglich einer vertikalen Ebene geneigt.

Besonders bevorzugt weist die Vorrichtung eine Erfassungseinrichtung auf, welche einen Eingriff eines Benutzers in vorbestimmte Bereiche einer Einhausung zum Einhausen der Wechseleinrichtung erfasst und bevorzugt ist eine Steuerungseinrichtung vorgesehen, welche die Wechseleinrichtung unter Berücksichtigung eines von dieser Erfassungseinrichtung erfassten Wert steuert.

Üblicherweise sind zu Beginn des Arbeitsprozesses oder nach einem Öffnen der Einhausung Prüffahrten der Wechseleinrichtung vorgesehen, um zu überprüfen, ob beispielsweise aus der Magazineinrichtung manuell Blasformeinrichtungen entnommen wurden. Durch diese Erfassungseinrichtung kann erreicht werden, dass, falls festgestellt wird, dass kein Eingriff eines Benutzers stattgefunden hat auch eine entsprechende Prüffahrt unterbleibt, was ebenfalls den Wechsel der Blasformen erleichtert und in geringeren Zeiten, in denen der Reinraum geöffnet ist, resultiert.

Bevorzugt ist die Erfassungseinrichtung auch dazu geeignet und bestimmt, einen Eingriff des Benutzers in einen Magazinbereich zu erfassen. In dieser Ausgestaltung ist es möglich, festzustellen, dass ein Benutzer zwar die Einhausung der Wechseleinrichtung geöffnet hat, jedoch nicht in dem Bereich der Magazineinrichtung tätig war. Auch in diesem Fall kann auf die oben erwähnte Prüffahrt der Wechseleinrichtung verzichtet werden. So ist es beispielsweise möglich, dass keine Prüffahrt oder Abfragerunde vorgenommen wird, wenn lediglich eine Tür der Einhausung für Montagetätigkeiten, nicht jedoch für Eingriffe in die Magazineinrichtung vorgenommen wurden. Diese Vorgehensweise kann sowohl bei einer hier beschriebenen aseptischen Vorrichtung als auch bei nicht aseptischen Vorrichtungen sinnvoll sein.

So ist es beispielsweise denkbar, dass keine Prüffahrt notwendig ist, wenn beispielsweise entweder eine Haupteingangstüre wie eine Schwenktüre des Einhausungsbereichs geöffnet wurde und/oder eine Magazinabfrage nicht getätigt wurde. Auf diese Weise ist beispielsweise das Durchführen von Wartungsarbeiten in einem bestimmten, wie etwa einen vorderen, Bereich des Wechseleinrichtungsmoduls möglich, ohne dass im Anschluss eine Prüffahrt durchgeführt wird.

Besonders bevorzugt handelt es sich bei der Wechseleinrichtung selbst um einen Standardroboter, der auch für andere Anwendungen nutzbar ist.

Bevorzugt handelt es sich bei dem Bereich, in dem ein Eingriff erfasst werden kann, um denjenigen Bereich, in dem die Magazinvorrichtung angeordnet ist. So ist es möglich, dass ein Benutzereingriff in die Magazineinrichtung erfasst wird. Falls kein derartiger Benutzereingriff erfasst wurde, kann auf eine Prüffahrt verzichtet werden.

Bevorzugt kann es sich bei der Erfassungseinrichtung um eine Lichtschrankenanordnung und insbesondere einen Lichtschrankenvorhang handeln. Daneben ist es auch möglich, das Öffnen einer Tür der Einhausung zu erfassen.

Die vorliegende Erfindung ist weiterhin auf ein Verfahren zum Betreiben einer Vorrichtung zum Umformen von Kunststoffvorformlingen zu Kunststoffbehältnissen gerichtet, wobei in einem Arbeitsbetrieb der Vorrichtung eine Transporteinrichtung die umzuformenden Kunststoffvorformlinge entlang eines vorgegebenen Transportpfads transportiert und wobei die Transporteinrichtung einen drehbaren Transportträger aufweist, an dem eine Vielzahl von Umformungsstationen angeordnet ist, wobei die Umformungsstationen jeweils Blasformeinrichtungen aufweisen, innerhalb derer die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit dem fließfähigen Medium beaufschlagen. Weiterhin weist die Vorrichtung einen Reinraum auf, innerhalb dessen die Kunststoffvorformlinge zu den Kunststoffbehältnissen expandiert werden und dieser Raum ist bzw. wird mit wenigstens einer Wandung gegenüber einer unsterilen Umgebung abgegrenzt.

Besonders bevorzugt wechselt in einem Wechselbetrieb eine Wechseleinrichtung Blasformeinrichtungen ein. Insbesondere handelt es sich bei dieser Wechseleinrichtung um einen Wechselroboter. Bevorzugt ist diese Wechseleinrichtung außerhalb des Reinraums angeordnet ist.

Bei einem bevorzugten Verfahren führt die Wechseleinrichtung wenigstens zeitweise eine Prüffahrt durch, um einen Belegungszustand einer Magazineinrichtung zu überprüfen. Insbesondere wird dabei geprüft, welche und/oder ggfs. wie viele Blasformeinrichtungen sich in der Magazineinrichtung befinden. Daneben wird bevorzugt auch eine Position der Blasformeinrichtungen in der Magazineinrichtung bestimmt.

Daneben ist es auch möglich, dass in einem Wechselbetrieb eine Wechseleinrichtung eine Vielzahl von Blasformeinrichtungen einwechselt und besonders bevorzugt sämtliche Blasformeinrichtungen sämtlicher Umformungsstationen. Daneben wäre es auch möglich, dass lediglich Teile von Blasformeinrichtungen eingewechselt werden. Besonders bevorzugt wechselt die Wechseleinrichtung diese Blasformeinrichtungen automatisch ein.

Daneben ist es auch möglich, dass andere Elemente der Blasformeinrichtungen oder auch andere Elemente der Umformungsstationen gewechselt werden. Besonders bevorzugt wird der drehbare Transportträger schrittweise oder stationsweise gedreht, um weitere Blasformeinrichtungen einwechseln zu können, bzw. um diese einzuwechseln.

Besonders bevorzugt werden Blasformeinrichtungen aus einem Magazin bzw. einer Magazineinrichtung entnommen, um eingewechselt zu werden. Besonders bevorzugt werden Blasformeinrichtungen auch in die Magazineinrichtung im Rahmen des Wechselvorgangs eingelegt.

Bei einem weiteren bevorzugten Verfahren wird geprüft, ob eine Schutzeinrichtung, in welcher sich die Wechseleinrichtung befindet, geöffnet wurde und/oder es wird geprüft, ob ein Benutzer in einen Bereich gelangt ist, in dem sich eine Magazineinrichtung zum Aufbewahren der Blasformeinrichtungen befindet. Bevorzugt wird geprüft, ob durch einen Benutzer eine Blasformeinrichtung gewechselt wurde.

Bei einem weiteren bevorzugten Verfahren wird in Abhängigkeit von der Prüfung ob eine Schutzeinrichtung, in welcher sich die Wechseleinrichtung befindet, geöffnet wurde und/oder ob ein Benutzer in einen Bereich gelangt ist, in dem sich eine Magazineinrichtung zum Aufbewahren der Blasformeinrichtungen befindet, entschieden ob eine Prüffahrt durchgeführt wird.

Sollte festgestellt werden, dass in einem vorgegebenen Zeitraum kein Benutzer in den Bereich gelangt ist, dann kann entschieden werden, dass keine Prüffahrt durchgeführt wird. Sollte festgestellt werden, dass ein Benutzer in den Bereich der Magazineinrichtung gelangt ist, kann eine Prüffahrt durchgeführt werden.

Weitere Vorteile und Ausführungsformen ergeben sich aus den beigefügten Zeichnungen. Darin zeigen:
- Fig. 1: eine schematische Darstellung einer erfindungsgemäßen Vorrichtung;
- Fig. 2: Eine Darstellung der Vorrichtung mit einer Wechseleinrichtung;
- Fig. 3: eine Draufsicht auf die in Fig. 2 gezeigte Vorrichtung;
- Fig. 4: eine Darstellung mit geöffneter Schnittstelle;
- Fig. 5: eine weitere Ansicht bei geöffneter Schnittstelle;
- Fig. 6: eine Darstellung einer Betätigungseinrichtung der Vorrichtung;
- Fig. 7: eine Darstellung der in Fig. 7 gezeigten Betätigungseinrichtung;
- Fig. 8: eine Darstellung einer weiteren Betätigungseinrichtung; und
- Fig. 9: eine Darstellung zum Wechsel von Beaufschlagungseinrichtungen.

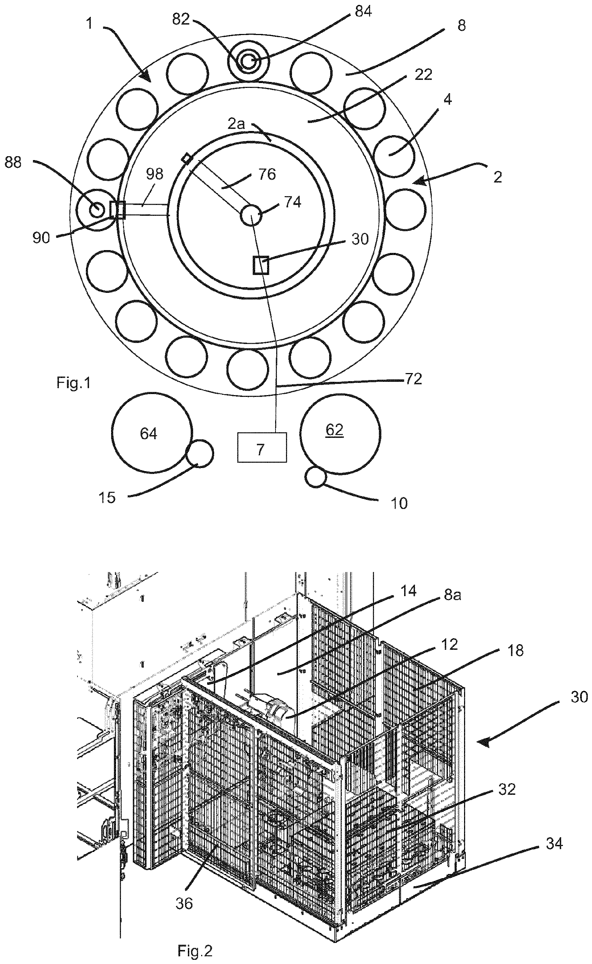

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der mindestens eine Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 98 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Fig. 2 zeigt eine Seitenansicht einer erfindungsgemäßen Vorrichtung. Dabei bezieht sich das Bezugszeichen 12 auf eine Wechseleinrichtung, insbesondere einen Wechselroboter (denkbar wäre jedoch auch der Einsatz eines Manipulators), welche zum Wechseln beispielsweise von Blasformeinrichtungen oder dergleichen dient. Das Bezugszeichen 8a kennzeichnet eine Wandung, welche gleichzeitig eine Grenze des Reinraums ausbildet. Das Bezugszeichen 14 kennzeichnet eine Schnittstelle, über welche beispielsweise der Wechsel von Blasformeinrichtungen durchführbar ist. Bei dieser Schnittstelle handelt es sich insbesondere um eine freigebbare Öffnung, durch welche hindurch die Wechseleinrichtung Wechselteile wie etwa Blasformeinrichtungen einwechseln kann.

Das Bezugszeichen 30 kennzeichnet in seiner Gesamtheit eine Einhausung, welche insbesondere auch zum Einhausen der Wechseleinrichtung 12 dient. Diese Einhausung weist dabei eine (ggfs als Gitter ausgestaltete) Wandung auf, sowie auch eine Tür 36, die geöffnet werden kann. Diese Einhausung dient insbesondere dem Schutz von Bedienpersonal aber auch umgekehrt dem Schutz der Wechseleinrichtung 12.

Innerhalb der Einhausung ist bevorzugt eine Magazineinrichtung 32 vorgesehen, in welcher beispielsweise Blasformeinrichtungen aber auch andere Wechselteile abgelegt werden können. Das Bezugszeichen 34 kennzeichnet einen Träger, an dem die Einhausung 30 und bevorzugt auch die Magazineinrichtung 32 und die Wechseleinrichtung 12 angeordnet ist.

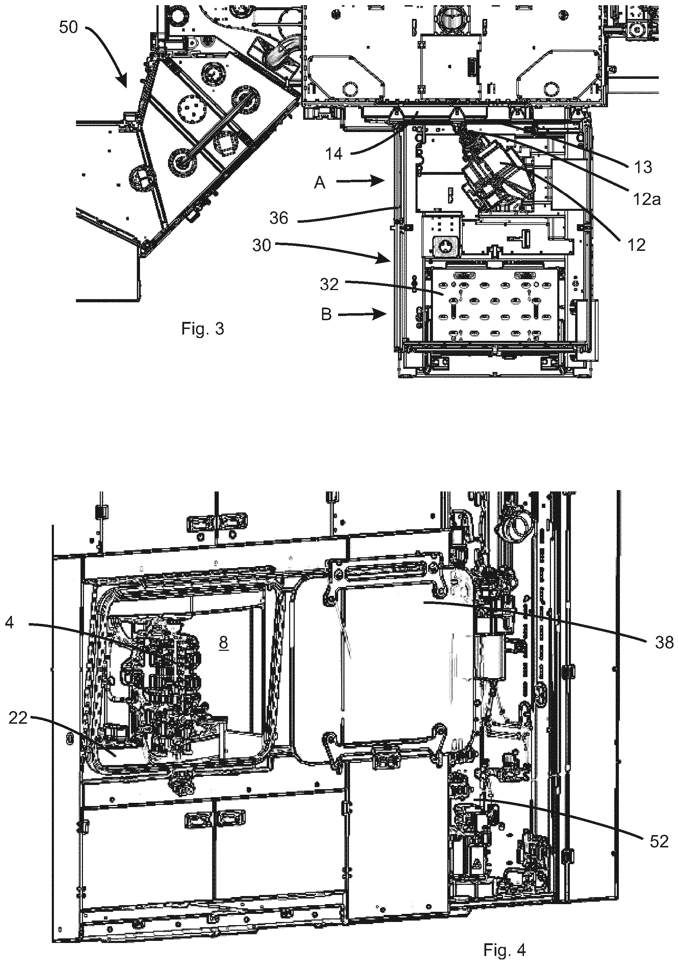

Fig. 3 zeigt eine Draufsicht auf die in Fig. 2 gezeigte Vorrichtung. Hier ist wieder die Wechseleinrichtung 12 sowie auch die Magazineinrichtung 32 erkennbar. Die Wechseleinrichtung 12 kann aus der Magazineinrichtung 32 Blasformteile entnehmen und diese einwechseln. Das Bezugszeichen 14 kennzeichnet wiederum die Schnittstelle, über welche Wechsel beispielsweise von Blasformteilen möglich sind. Das Bezugszeichen 12a kennzeichnet eine Greifeinrichtung der Wechseleinrichtung. Diese Greifeinrichtung 12a kann beispielsweise zum Greifen von Blasformeinrichtungen geeignet und bestimmt sein.

Bevorzugt ist diese Greifeinrichtung wechselbar ausgebildet und kann beispielsweise gegen andere Greifeinrichtungen (etwa zum Greifen von Beaufschlagungseinrichtungen wie etwa Blasdüsen) eingewechselt werden.

Bei der Durchführung eines Wechselvorgangs wird zunächst die Schnittstelle 14 geöffnet, was beispielsweise durch Öffnen eines Isolatorfensters erfolgen kann. Dieses Öffnen kann dabei manuell, automatisiert oder durch die Wechseleinrichtung 12 erfolgen. Anschließend erfolgt ein Wechsel der Wechselteile, etwa der Blasformeinrichtungen. In einem weiteren Verfahrensschritt wird das Isolatorfenster wieder geschlossen und damit auch der Reinraum geschlossen. Schließlich erfolgt bevorzugt eine Sterilisation des Innenbereichs des Isolators bzw. des Reinraums.

Bevorzugt ist die hier beschriebene Vorrichtung in der Lage, in einem Arbeitsbetrieb bzw. Produktionsbetrieb und in einem Wechselbetrieb betrieben zu werden. Bevorzugt schließen sich diese Betriebsarten gegenseitig aus und/oder können nicht gleichzeitig durchgeführt werden.

Wie in den Fig. 2 und 3 gezeigt, befindet sich die Wechseleinrichtung 12, bzw. der Roboter außerhalb des Reinraums, bzw. nicht im aseptischen Bereich. Auf diese Weise ist es möglich, dass die Wechseleinrichtung 12 selbst nicht steril ausgeführt werden muss.

Das Bezugszeichen 50 in Fig. 3 bezieht sich auf eine Sterilisationseinrichtung, welche zum Sterilisieren der Kunststoffvorformlinge dient.

Bei einer bevorzugten Ausgestaltung kann erkannt werden, ob die Tür 36 der Einhausung 30 geöffnet wurde oder nicht. Falls die Tür nicht geöffnet wurde, ist es möglich, dass die Wechseleinrichtung keine weitere Prüffahrt durchführt, da sichergestellt ist, dass aus der Einhausung beispielsweise keine Wechselteile durch den Benutzer entnommen wurden. Diese Ausgestaltung ist dabei sowohl für die hier beschriebene aseptische Umformungseinrichtung möglich als auch für nicht aseptische Anwendungen. Auf diese Weise wäre es auch bevorzugt möglich, dass beispielsweise Wartungsarbeiten in dem vorderen Bereich A (vgl. Fig. 3) durchgeführt werden, nicht aber in dem Bereich der Magazineinrichtung B. Auch in diesem Fall kann festgelegt werden, dass keine weitere Prüffahrt der Robotereinrichtung, bzw. Wechseleinrichtung 12 durchgeführt wird.

Zwischen dem Bereich A und dem Bereich B kann eine Erfassungseinrichtung wie etwa eine Vielzahl von Lichtschranken und/oder ein Lichtschrankenvorhang (nicht gezeigt) vorgesehen sein, mittels dessen geprüft werden kann, ob ein Benutzer von dem Bereich A in den Bereich B gelangt ist.

Fig. 4 zeigt eine weitere Darstellung der erfindungsgemäßen Vorrichtung. Hier ist eine Tür, bzw. die Schiebetür 38 dargestellt. Daneben erkennt man auch die Umformungsstation 4, die innerhalb des Reinraums 8 angeordnet ist. Daneben ist auch der Stationsträger 22, bzw. der Transportträger 22 erkennbar. Das Bezugszeichen 52 kennzeichnet eine Ventilanordnung, bzw. Ventilinsel, welche zum Steuern von Drücken dient. Diese kann hier bevorzugt unterhalb der einzelnen Umformungsstationen angeordnet sein.

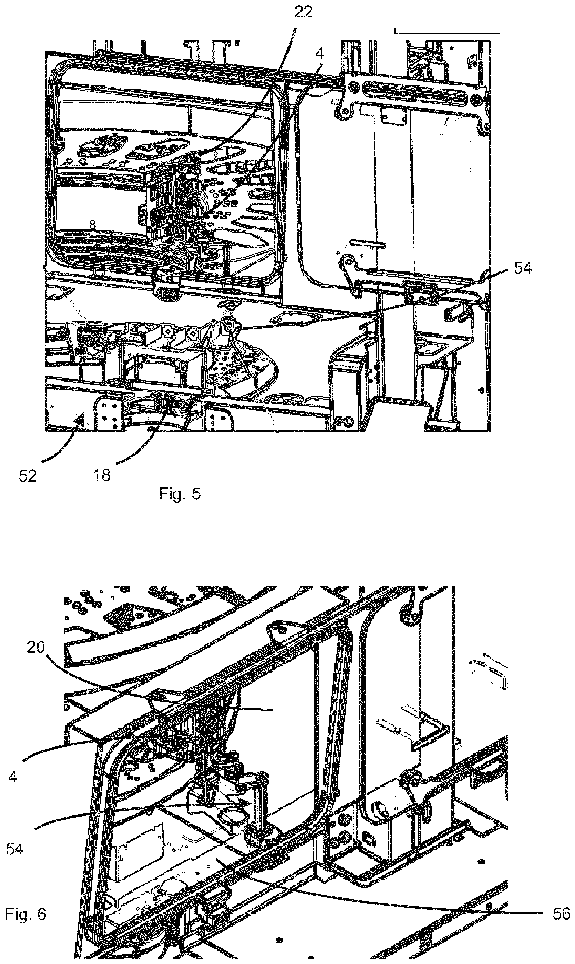

Fig. 5 zeigt eine weitere Ansicht einer erfindungsgemäßen Vorrichtung. Hierbei ist auch die Betätigungseinheit 54 für eine Verriegelung der Formträger erkennbar. Diese ist bevorzugt teilweise außerhalb des Reinraums und teilweise innerhalb des Reinraums angeordnet. Das Bezugszeichen 18 bezieht sich auf eine Zentriereinheit sowie den Formträgerbetätiger.

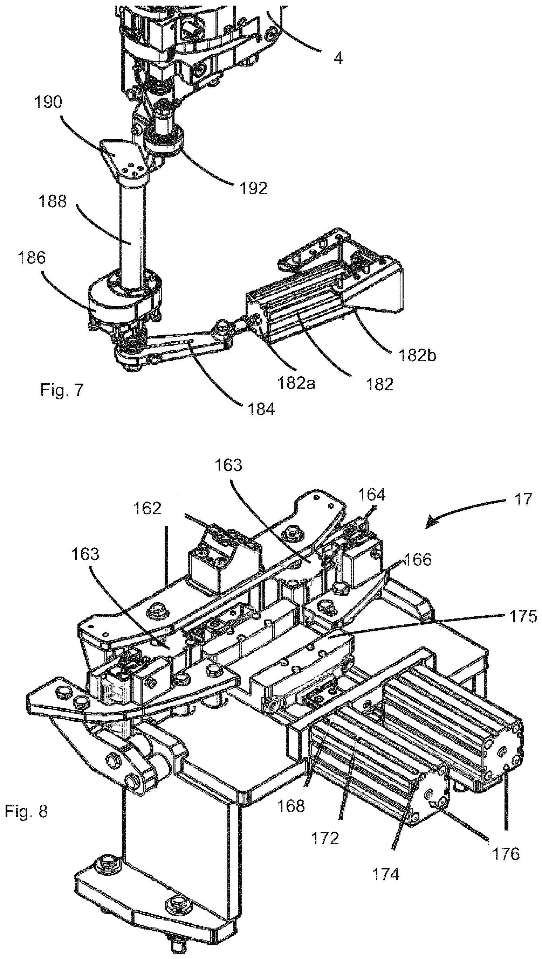

Unter Bezugnahme auf die Fig. 6 und 7 wird die Betätigungseinrichtung 54 für die Verriegelung der Formträger erläutert.

Besonders bevorzugt ist die Betätigungseinrichtung 18 zur Verriegelung (insbesondere eines Verriegelungsmechanismus der Blasformträger) direkt an einer Grundplatte 56 des Reinraums angeordnet. Wie sich aus Fig. 7 ergibt, weist diese Betätigungseinrichtung 18 eine doppelwirkende Zylindereinrichtung auf, welche dazu bestimmt ist, die Verriegelungsklappe des Formträgers insbesondere durch eine Hebelanordnung 184 zu öffnen und zu schließen.

Insbesondere handelt es sich bei der Doppelzylinderanordnung 182 um einen Pneumatikzylinder. Die Bezugszeichen 182a und 182b kennzeichnen Abfragepositionen für die Zylindereinrichtung. Dabei ist in der Position 182a die Zylindereinrichtung eingefahren und in der Position 182b ist die Zylindereinrichtung ausgefahren. Bevorzugt weist daher die Vorrichtung eine Positionsbestimmungseinrichtung auf, welche eine Position der Zylindereinrichtung 182 erfasst.

Das Bezugszeichen 186 kennzeichnet ein Übertragungselement und Bezugszeichen 188 eine Übertragungsstange, über welche Drehbewegungen auf ein Hebelelement 190 übertragen werden können. Auf diese Weise kann durch die Zylindereinrichtung eine Verriegelung der Blasformteile geöffnet oder geschlossen werden. Das Bezugszeichen 192 kennzeichnet eine Kurvenrolle, welche im Arbeitsbetrieb gegenüber einer (nicht gezeigten) Führungskurve abrollt, um die Blasformträger in einen verriegelten oder entriegelten Zustand zu führen.

Zum Zwecke des Blasformwechsels kann dieser Verriegelungsmechanismus von der Betätigungseinrichtung 18 betätigt werden.

Fig. 8 zeigt eine weitere Betätigungseinrichtung 17 zum Öffnen und Schließen für die Blasformträger und bevorzugt auch für eine Zentrierung. Bevorzugt ist dabei ein Formträgerbetätiger 176 vorgesehen sowie ein Zentrierteil 162, der zum Zentrieren der Umformungsstationen dient. Bevorzugt ist auch diese Betätigungseinrichtung 17 an einem Grundgestell der Vorrichtung montiert. Bevorzugt ist die Betätigungseinrichtung 17 derart angeordnet, dass sie nachträglich insbesondere ohne Entfernung einer Umformungsstation montiert oder demontiert werden kann.

Bevorzugt weist die Betätigungseinrichtung 17 eine Ruhestellung auf, wenn eine Formträgerkurve ausgefahren ist. Auf diese Weise wird erreicht, dass es bei einer laufenden, bzw. im Arbeitsbetrieb befindlichen Maschine nicht zu Kollisionen kommt.

Wie erwähnt, beziehen sich die Bezugszeichen 176 auf Pneumatikzylinder für die Ansteuerung des Zentrierklotzes 175. Die Bezugszeichen 163 beziehen sich auf Ansteuerungszylinder für die Formträger.

In der mit dem Bezugszeichen 166 gezeichneten Position ist der Pneumatikzylinder für den Zentrierklotz eingefahren und in der mit dem Bezugszeichen 164 gezeigten Situation, ist der Zylinder für den Zentrierklotz ausgefahren.

In der mit dem Bezugszeichen 174 gekennzeichneten Situation ist der Zylinder für den Formträger eingefahren und in der mit dem Bezugszeichen 168 gekennzeichneten Situation ist der Zylinder für den Formträger voll ausgefahren und damit in einer Ruheposition befindlich. In der mit dem Bezugszeichen 172 gekennzeichneten Position ist der Zylinder ausgefahren, sodass ein Formwechsel möglich ist.

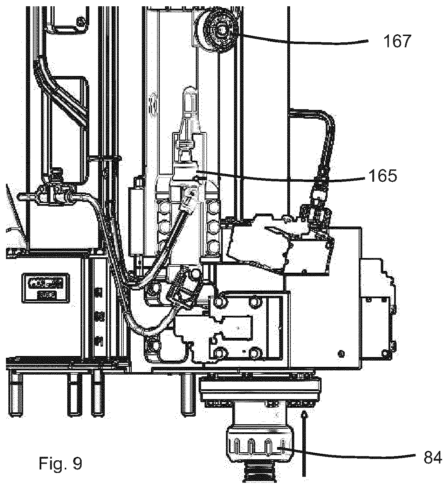

Fig. 9 zeigt schließlich die Betätigungseinrichtung für die Blasdüse 84 bzw. In einer bevorzugten Ausgestaltung wird anstelle einer mechanischen Feder eine pneumatische Feder insbesondere in Form eines Pneumatikzylinders 165 verwendet. Durch diesen Pneumatikzylinder kann die Blasdüse 82 aktiv betätigt und/oder zugestellt werden. Der Pneumatikzylinder dient insbesondere dazu, um die Blasdüse in Richtung Kunststoffvorformling zu spannen, damit die Blasdüse nicht abhebt. Weiterhin kann eine Abfrageeinrichtung vorgesehen sein, welche eine Position der Rolle 167 feststellt. Dabei kann beispielsweise eine zentrale Abfrage dieser Rollenstellung etwa durch einen Näherungsinitiator verwendet werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen jeweils Blasformeinrichtungen (82) aufweisen, innerhalb derer die Kunststoffvorformlinge (10) durch Beaufschlagung mit einem fließfähigen Medium zu den Kunststoffbehältnissen (15) umformbar sind und die Umformungsstationen (4) jeweils Beaufschlagungseinrichtungen (84) aufweisen, um die Kunststoffvorformlinge (10) mit dem fließfähigen Medium zu beaufschlagen, wobei die Vorrichtung (1) einen Reinraum (8) aufweist, innerhalb dessen die Kunststoffvorformlinge (10) zu den Kunststoffbehältnissen (15) expandiert werden und dieser Reinraum (8) mittels wenigstens einer Wandung gegenüber einer unsterilen Umgebung abgegrenzt ist,
**dadurch gekennzeichnet, dass**
die Vorrichtung (1) eine Wechseleinrichtung (12) zum Wechseln von Blasformeinrichtungen aufweist und diese Wechseleinrichtung bevorzugt außerhalb des Reinraums (8) angeordnet ist.

2. Vorrichtung nach Anspruch 1,
**dadurch gekennzeichnet, dass**
die Vorrichtung (1) wenigstens eine Betätigungseinrichtung (18, 54, 165) zum Durchführen eines Wechselvorgangs von Blasformeinrichtungen (24) der Umformungsstation (4) aufweist und bevorzugt diese Betätigungseinrichtung aus einer Gruppen von Betätigungseinrichtungen ausgewählt ist, welche Betätigungseinrichtungen zum Öffnen und Schließen von Blasformträgern, Betätigungseinrichtungen zum Lösen und Aktivieren einer Befestigungseinrichtung zum Lösen und Befestigen von Blasformteilen an Blasformträgerteilen, Betätigungseinrichtungen zum Zentrieren des drehbaren Transportträgers, Betätigungseinrichtungen zum Entriegeln und Verriegeln von Blasformträgern, Betätigungseinrichtungen zum Spannen und Entspannen von Beaufschlagungseinrichtungen, Betätigungseinrichtungen zum Öffnen und/oder Schließen des Reinraums und dergleichen enthält.

3. Vorrichtung (1) nach dem vorangegangenen Anspruch,
**dadurch gekennzeichnet, dass**
wenigstens eine der Betätigungseinrichtungen (18, 54, 165) und bevorzugt mehrere der Betätigungseinrichtungen außerhalb des Reinraums angeordnet sind.

4. Vorrichtung nach wenigstens einem der vorangegangenen Ansprüche,
**dadurch gekennzeichnet, dass**
die Vorrichtung (1) eine Magazineinrichtung (32) zum Aufbewahren von Blasformeinrichtungen (24) aufweist.

5. Vorrichtung nach wenigstens einem der vorangegangenen Ansprüche,
**dadurch gekennzeichnet, dass**
die Vorrichtung eine Einhausung (30) zum Einhausen der Wechseleinrichtung (12) aufweist und bevorzugt diese Einhausung in wenigstens zwei Bereiche unterteilt ist.

6. Vorrichtung nach dem vorangegangenen Anspruch,
**dadurch gekennzeichnet, dass**
die zwei Bereiche voneinander getrennt sind und insbesondere durch eine Sicherungseinrichtung getrennt sind.

7. Vorrichtung nach wenigstens einem der vorangegangenen Ansprüche 5 oder 6,
**dadurch gekennzeichnet, dass**
in einem einen Bereich die Wechseleinrichtung angeordnet ist und in dem anderen Bereich eine Magazineinrichtung zur Aufbewahrung von Wechselteilen und insbesondere Blasformeinrichtungen.

8. Vorrichtung nach wenigstens einem der vorangegangenen Ansprüche,
**dadurch gekennzeichnet, dass**
die Vorrichtung (1) eine öffenbare Schnittstelle (14) aufweist, über welche die Wechseleinrichtung (12) Wechselvorgänge, insbesondere der Blasformeinrichtungen (24), durchführen kann.

9. Vorrichtung (1) nach dem vorangegangenen Anspruch,
**dadurch gekennzeichnet, dass**
die Vorrichtung eine Betätigungseinrichtung zum Öffnen der Schnittstelle aufweist, wobei bevorzugt ein Öffnen der Schnittstelle manuell oder automatisiert oder durch die Wechseleinrichtung selbst erfolgen kann.

10. Vorrichtung (1) nach wenigstens einem der Ansprüche 7 oder 8,
**dadurch gekennzeichnet, dass**
die Schnittstelle ein Trennelement aufweist, welches den Reinraum gegenüber der Umgebung abtrennt, wobei dieses Trennelement in einer Ebene verläuft, welche schräg gegenüber einer vertikalen Richtung verläuft.

11. Vorrichtung (1) nach wenigstens einem der vorangegangenen Ansprüche,
**dadurch gekennzeichnet, dass**
die Vorrichtung (1) eine Erfassungseinrichtung aufweist, welche einen Eingriff eines Benutzers in vorbestimmte Bereiche einer Einhausung zum Einhausen der Wechseleinrichtung (12) erfasst und bevorzugt eine Steuerungseinrichtung vorgesehen ist, welche die Wechseleinrichtung unter Berücksichtigung eines von dieser Erfassungseinrichtung erfassten Wertes steuert.

12. Verfahren zum Betreiben einer Vorrichtung zum Umformen von Kunststoffvorformlingen (10) zu Kunststoffbehältnissen (15) wobei in einem Arbeitsbetrieb der Vorrichtung eine Transporteinrichtung (2) die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen jeweils Blasformeinrichtungen (24) aufweisen, innerhalb derer die Kunststoffvorformlinge durch Beaufschlagung mit einem fließfähigen Medium zu den Kunststoffbehältnissen umgeformt werden und die Umformungsstationen (4) jeweils Beaufschlagungseinrichtungen (84) aufweisen, welche die Kunststoffvorformlinge mit dem fließfähigen Medium beaufschlagen, wobei die Vorrichtung einen Reinraum (8) aufweist, innerhalb dessen die Kunststoffvorformlinge (10) zu den Kunststoffbehältnissen expandiert werden und dieser Reinraum (8) mittels wenigstens einer Wandung gegenüber einer unsterilen Umgebung abgegrenzt wird,
**dadurch gekennzeichnet, dass**
in einem Wechselbetrieb eine Wechseleinrichtung (12) Blasformeinrichtungen einwechselt und/oder auswechselt, wobei bevorzugt die Wechseleinrichtung außerhalb des Reinraums (8) angeordnet ist.

13. Verfahren nach dem vorangegangenen Anspruch,
**dadurch gekennzeichnet, dass**
die Wechseleinrichtung eine Prüffahrt ausführt um einen Belegungszustand einer Magazineinrichtung zu prüfen.

14. Verfahren nach Anspruch 12,
**dadurch gekennzeichnet, dass**
geprüft wird, ob eine Schutzeinrichtung, in welcher sich die Wechseleinrichtung befindet, geöffnet wurde und/oder geprüft wird, ob ein Benutzer in einen Bereich gelangt ist, in dem sich eine Magazineinrichtung zum Aufbewahren der Blasformeinrichtungen befindet.

15. Verfahren nach wenigstens einem der vorangegangenen Ansprüche,
**dadurch gekennzeichnet, dass**
in Abhängigkeit von der Prüfung ob eine Schutzeinrichtung, in welcher sich die Wechseleinrichtung befindet, geöffnet wurde und/oder ob ein Benutzer in einen Bereich gelangt ist, in dem sich eine Magazineinrichtung zum Aufbewahren der Blasformeinrichtungen befindet, entschieden wird, ob eine Prüffahrt durchgeführt wird.
